# EUROPÄISCHE PATENTSCHRIFT

(11) **EP 0 846 898 B1**
(45) Veröffentlichungstag und Bekanntmachung des Hinweises auf die Patenterteilung: **14.03.2001**
(21) Anmeldenummer: 97119511.0
(22) Anmeldetag: 07.11.1997
(51) Int. Cl.: F16H 59/10, F16H 63/42

(54) **Schaltvorrichtung für ein Getriebe eines KFZ mit einer gekrümmten Leiterplatte und Verfahren zur Herstellung dieser Leiterplatte**
Shift device for a motor vehicle transmission having a curved printed circuit board and method to fabricate such a circuit board
Dispositif de changement de vitesses pour transmission véhiculaire avec circuit imprimé courbé et méthode de fabrication d'un tel circuit.

(30) Priorität: 04.12.1996 DE 19650154
(43) Veröffentlichungstag der Anmeldung: 10.06.1998
(73) Patentinhaber: ZF Lemförder Metallwaren AG, 49448 Lemförde (DE)
(72) Erfinder: Ersoy, Metin, Dr., 65396 Walluf (DE); Gassmann, Hans-Josef, 31715 Meerbeck (DE)

(56) Entgegenhaltungen:
- EP-A- 0 477 981
- EP-A- 0 575 658
- EP-A- 0 783 081
- DE-U- 29 606 501
- US-A- 3 427 715
- US-A- 4 660 430

## Beschreibung

Die Erfindung betrifft eine Schaltvorrichtung für ein Getriebe eines KFZ mit einer mit Sensoren, Leuchtdioden, Prozessoren und anderen elektronischen Bauelementen bestückten Leiterplatte, die unter einer Abdeckung der Schaltvorrichtung installiert ist und ein Verfahren zur Herstellung einer solchen Leiterplatte.
Die am Schalthebel der Schaltvorrichtung vorgenommenen Schaltbewegungen werden dabei elektronisch an das Getriebe weitergegeben.

In der US 3,427,715 wird ein Verfahren zur Herstellung einer Leiterplatte vorgestellt. Diese wird mit elektronischen Bauelementen bestückt, erwärmt und anschließend abgewinkelt, um somit eine annähernd quaderförmige, räumliche Gestalt der Leiterplatte zu erhalten. Hierfür ist es jedoch erforderlich, Querschnittsreduzierungen, die Falzkanten bilden, in der Leiterplatte vorzusehen. Eine derartige Ausführung ist sehr aufwendig und damit kostenintensiv, da bereits die Vorfertigung dieser Leiterplatte mehrere aufeinanderfolgende Arbeitsschritte erfordert. Ferner wird die Leiterplatte bei der in US 3,427,715 beschriebenen Lösung auf 245 °C erhitzt, sodaß beispielsweise SMD-Bauelemente keine Anwendung finden können.

Aus der EP 0 477 981 A2 ist darüber hinaus ein Verfahren zur Herstellung einer abgewinkelten, vielschichtigen Leiterplatte bekannt, wobei an den späteren Biegestellen verstärkte Leiterzüge formiert werden müssen. In einem ersten Verfahrensschritt wird eine Vielzahl von Leiterplatten beschichtet, wobei die verschiedenen Leiterplattenschichten anschließend durch thermische Adhäsion zu einer monolitischen, ebenen, vielschichtigen Platte zusammengefügt werden, die dann insgesamt nach einer Abwinkelung durch Anwendung einer konstanten Arbeitskraft die gewünschte endgültige Form erhält.

Bekannt sind ferner Schaltvorrichtungen, deren Schalthebel eine Abdeckung durchgreift, an der die Schaltstellungen optisch angezeigt werden. Dabei sind die vorhandenen Schaltstellungssymbole zumeist permanent ausgeleuchtet und um dem Fahrzeugführer darzustellen, welchen Getriebegang er eingelegt hat, wird das entsprechende Symbol stärker beleuchtet.
Zum Beispiel offenbart DE 296 06 501.3 eine derartige Schaltstellungsanzeige. In den mit dem Schalthebel mitbewegten Kabeln treten Ermüdungserscheinungen auf und die Ausleuchtung der Schaltstellungssymbole ist nicht vollkommen homogen.

Es sind Schaltvorrichtungen bekannt, die über Sensoren ein der Schaltstellung des Schalthebels entsprechendes Signal an eine Steuereinheit des Getriebes übergeben, beispielsweise aus DE 196 08 981.6. Die Funktion des Erfassens des Signals, der Codierung, der Verarbeitung und des Weiterleitens werden an verschiedenen Stellen der Schaltung ausgeführt und die Signale werden über Kabel, Stecker und weitere Elemente weitergegeben. Dieser Aufbau ist wegen der vielen Schnittstellen störanfällig und kostenintensiv.

Im Stand der Technik sind derzeit Leiterplatten bekannt, die in zwei Gruppen eingeteilt werden können. Man unterscheidet flexible Leiterplatten und starre Leiterplatten.

Flexible Leiterplatten sind wegen der Nachgiebigkeit des Leiterplattenmaterials bei der Bestückung und Montage schwer zu handhaben und im Einsatzfall nicht genügend formstabil. Sie sind sehr teuer und daher auf Grund der hohen notwendigen Stückzahlen im Automobilbau nicht akzeptabel.

Starre Leiterplatten sind im Vergleich zu flexiblen Leiterplatten kostengünstiger und lassen sich einfacher verarbeiten.
Sie weisen eine ebene Oberflächenform auf und können auf der Ober- und Unterseite mit Leiterzügen versehen sein. Diese Leiterplatten werden in ebenem Zustand bestückt, gelötet und nach dem Löten abgekühlt.

Derzeit haben sich bereits zur Bestückung der Leiterplatten sogenannte SMD(surface mounted devices)Bauelemente durchgesetzt. Das sind Bauelemente, die auf die Oberfläche aufgesetzt werden.
Sie erfordern keine Bohrungen in der Leiterplatte mehr, um sie zu positionieren und einzusetzen, sondern sie werden auf die vorher per Siebdruck auf die Leiterplatte ausgebrachte Lotpaste aufgesetzt und werden bis zum endgültigen Verlöten durch die Adhäsionskräfte der Lotpaste in der Position gehalten in die sie durch einen Bestückungsautomaten gebracht werden.

Leiterplatten können durchkontaktiert sein, das heißt sie können auf beiden Seiten der Leiterplatte Leiterzüge aufweisen, die miteinander an gewünschten Stellen verbunden sind, indem die Leiterzüge Durchgangsbohrungen aufweisen, die durch die entsprechenden zu verbindenden Leiterzüge und die Leiterplatte hindurchgehen, wobei diese Bohrung mit leitendem Material ausgewandet sind , um die leitenden Verbindungen zwischen den durchbohrten, zu verbindenden Leiterzügen herzustellen.

Eingebaut werden diese starren ebenen Leiterplatten in ebenem Zustand.

Von Nachteil ist, daß man eine starre Leiterplatte nicht nachträglich, also nach dem sie bereits bestückt und gelötet ist, biegen kann, um sie beispielsweise einer gewünschten Einbausituation, die eine gekrümmte Leiterplatte erfordern würde, anpassen zu können.

Eine starre Leiterplatte ist zwar in gewissem Grade biegsam, diese Biegsamkeit reicht aber nicht aus, um der Leiterplatte eine dauerhafte Krümmung verleihen zu können, beim nachträglichen Biegen der fertigt bestückten und gelöteten Leiterplatte würden Materialspannungen entstehen, die sich auf die Leiterzüge und auf die Anschlüsse der Bauelemente übertragen würden. Eine derart gebogene Leiterplatte würde Materialspannungen aufweisen und könnte den Belastungen im Fahrzeug durch die herrschenden Betriebsbedingungen wie Vibrationen, Temperaturschwankungen und dergleichen nicht standhalten; die Streßbelastung der Bauelemente würde zwangsweise zu vorprogrammierten Ausfällen der Leiterplatte, der Bauelemente oder beider gemeinsam führen.

Unter der Abdeckung von Schaltvorrichtungen, die zumeist eine gebogene oder gekrümmte Oberflächenkontur aufweisen, um optisch besser mit der Schwenkbewegung des Schalthebels zu harmonieren, können sich beispielsweise auf ebenen Leiterplatten installierte Glimmlämpchen, Leuchtdioden und dergleichen, befinden, die zur Ausleuchtung der Schaltstellungssymbole dienen. Hier tauchen aber immmer wieder Probleme auf, die mit dem Auseinanderklaffen der Kontur der Abdeckung der Schaltvorrichtung und der Kontur der eingebauten Leiterplatte zusammenhängen; beispielsweise ist der Abstand der Leuchtmittel zu den auszuleuchtenden Symbolen nicht gleichgroß, was zu einer nicht erwünschten unterschiedlich starken Ausleuchtung führen kann.

Es ist Aufgabe der Erfindung, eine Schaltvorrichtung zu schaffen, die keine mit dem Schalthebel mitbewegten Kabel und Verbinder aufweist, die eine minimale Anzahl von Bauelementen benötigt und die eine optimale Ausleuchtung der Schaltstellungssymbole ermöglicht.

Erfindungsgemäß wird diese Aufgabenstellung dadurch gelöst, daß die Schaltvorrichtung eine der Krümmung der Abdeckung der Schaltvorrichtung angepaßte gekrümmte Leiterplatte aufweist, die alle notwendigen elektronischen Bauelemente - zum Beispiel Sensoren, Leuchtdioden, Prozessoren - einer Schaltung auf dieser einen Leiterplatte unterbringt.

Eine erfindungsgemäße Schaltvorrichtung weist eine gekrümmte Leiterplatte auf, die der Krümmung der Abdeckung der Schaltvorrichtung optimal angepaßt ist und in geringem Abstand von weniger als 10 mm unter der Abdeckung der Schaltvorrichtung montiert wird. Beispielsweise kann sie in eine durchsichtige Kunststoffplatte, die mit den Schaltstellungssymbolen versehen sein kann, eingerastet werden. Außerdem kann in der Schaltvorrichtung durch die kompakte Bauweise Platz gespart und das Gewicht reduziert werden.

Dadurch, daß die Krümmung der Leiterplatte genau der Krümmung der Abdeckung der Schaltvorrichtung angepaßt ist, kann erreicht werden, daß eine homogene diffuse Ausleuchtung der einzelnen Schaltstellungssymbole die auf der gekrümmten Abdeckung der Schaltvorrichtung zu sehen sind, erreicht wird, da der Abstand zwischen den auf der Leiterplatte installierten Leuchtdioden zu den Schaltstellungssymbolen konstant ist.

Auf dieser **einen** Leiterplatte sind **alle** elektronischen Bauelemente installiert, die für die Erfassung der Schalthebelstellung und zur Ausleuchtung der Schaltstellungssymbole notwendig sind. Mit dem Schalthebel wird mindestens ein Aktivierungselement, beispielsweise ein Magnet mitbewegt. Beim Wählen der Getriebegänge wird der Magnet an den auf der Leiterplatte installierten Sensoren entlanggeführt und löst in ihnen ein Signal aus, welches in einem Prozessor weiterverarbeitet werden kann. Die mit den Sensoren korrespondierenden Aktivierungselemente, können direkt am Schalthebel installiert, oder vorzugsweise an einer Rolloabdeckung der Schaltvorrichtung angebracht sein, die beim Bewegen des Schalthebels mit diesem mitgeführt wird.

Vorzugsweise werden die Sensoren so installiert, daß sie die Leiterplatte durchgreifen, das heißt, daß die Leiterplatte an diesen Stellen Druchbrüche, also Löcher aufweist, über denen oder in denen die Sensoren installiert werden können. Auf der einen Seite der Leiterplatte, bezeichnen wir sie als Oberseite, sind die elektronischen Bauelemente installiert und an der anderen Seite, der Unterseite der Leiterplatte wird mit dem Verschwenken des Schalthebels mindestens ein Aktivierungselement mitgeführt und an den Sensoren, die die Leiterplatte durchgreifen, entlanggeführt.
Über die Sensoren wird ein elektrisches Signal erzeugt, welches in einem, auf der Leiterplatte installierten, Prozessor verarbeitet und elektronisch als Steuersignal an das Getriebe weitergeleitet wird.

Zur Herstellung einer erfindungsgemäßen gekrümmten Leiterplatte wird eine herkömmliche starre, ebene Leiterplatte verwendet. Diese kann beispielsweise aus glasfaserverstärktem Epoxidharz besthen. Andere Trägermaterialien liegen im Bereich des Erfindungsgedankens. In bekannter Art und Weise werden die Leiterzüge erstellt und gegebenenfalls notwendige Durchkontaktierungen vorgenommen. Es werden die vorgesehenen Durchbrüche beziehungsweise Aussparungen aus der Leiterplatte herausgearbeitet. Dann wird mittels Siebdruckverfahren die Lotpaste genau auf die Stellen aufgetragen, auf die danach die Bauelemente mit ihren zu verlötenden Anschlüssen aufgesetzt werden sollen.
Anschließend wird im Bestückungsautomaten die Bestückung der ebenen, starren Leiterplatte mit den vorgesehenen Bauelementen vorgenommen. Es werden vorzugsweise SMD-Bauelemente verwendet. Diese elektronischen Bauelemente werden dabei genau auf die vorher aufgebrachten Lotpastpunkte aufgesetzt und werden - auch vor dem endgültigen Verlöten schon - durch die Adhäsionskräfte der Lotpaste auf ihren vorgesehenen Plätzen festgehalten.

Im nächsten Arbeitsschritt wird die bestückte zum Löten vorbereitete Leiterplatte in eine Aufnahme, beispielsweise einen Rahmen, eingespannt, der ihr eine gewünschte Krümmung verleiht. In diesem Rahmen wird die nunmehr gekrümmte Leiterplatte in einen Lötofen gegeben, in dem das Löten erfolgt.

Nach dem Abschluß des Lötprozesses und dem Herausnehmen der erkalteten gekrümmten Leiterplatte aus dem Rahmen, behält die Leiterplatte ihren gekrümmten Zustand bei, da das während des Lötprozesses zwar weich gewordene, nach dem Erkalten aber wieder erstarrte Epoxidharz der Leiterplatte die eingebundenen Glasfasern der Leiterplatte in gekrümmtem Zustand hält.

Erfindungsgemäß hergestellte bestückte gekrümmte Leiterplatten können auch in räumlicher Anordnung zusammengesetzt werden. Es können ebene oder gekrümmte, starre oder flexible Leiterplatten zusätzlich angelötet oder anderweitig damit verbunden werden, um auch kompliziertere Leiterplattenkonfigurationen verwirklichen zu können, die zum Beispiel notwendig werden können, um Leiterplatten in enge Bauräume einpassen zu können.

Erfindungsgemäß wird an eine bereits gekrümmte Leiterplatte eine bestückte Ergänzungsleiterplatte angelötet. Denkbar und im Sinne der Erfindung ist aber auch, daß dieser Arbeitsschritt gleich mit dem übrigen Löten durchgeführt wird.

Ein Ausführungsbeispiel der Erfindung wird nachstehend unter Bezugnahme auf die Zeichnung näher erläutert. Es zeigen:
- Figur 1:: Gekrümmte Leiterplatte für Automatikschaltung mit darunterliegender Rolloabdeckung
- Figur 1a:: Einzeldarstellung der Rolloabdeckung aus Figur 1 mit integrietem Magneten als Aktivierungselement der Sensoren
- Figur 2:: Gekrümmte Leiterplatte mit Ergänzungsleiterplatte für Automatikschaltung mit Tipgasse
- Figur 2a:: Einzeldarstellung der Rolloabdeckung aus Figur 2 mit integrieten Magneten als Aktivierungselemente der Sensoren

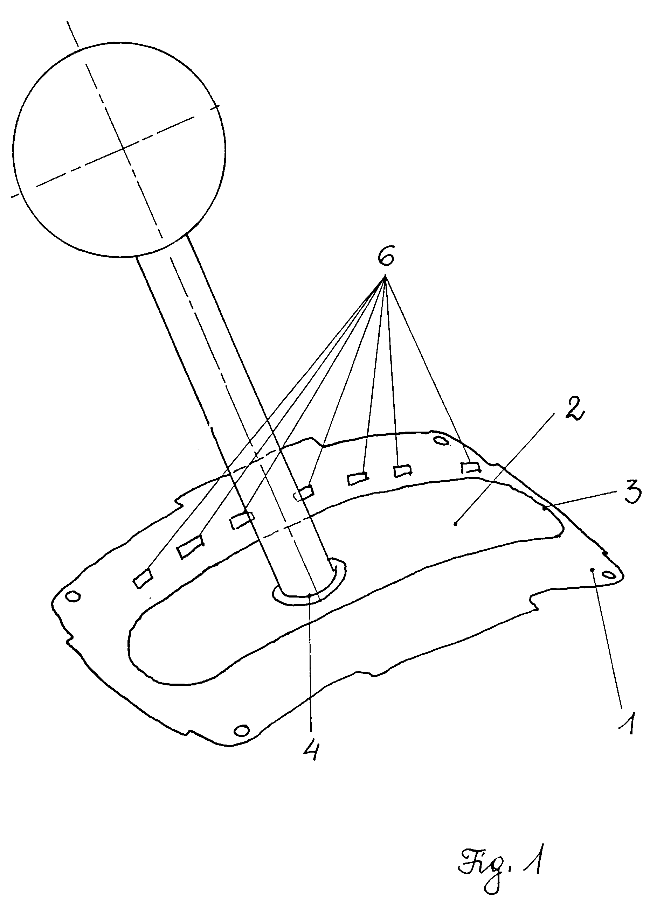

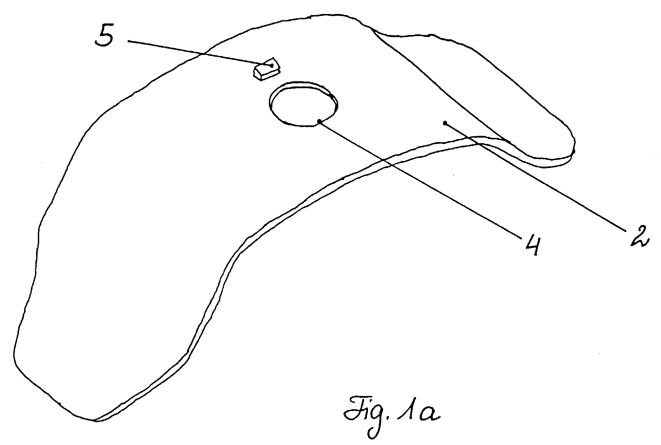

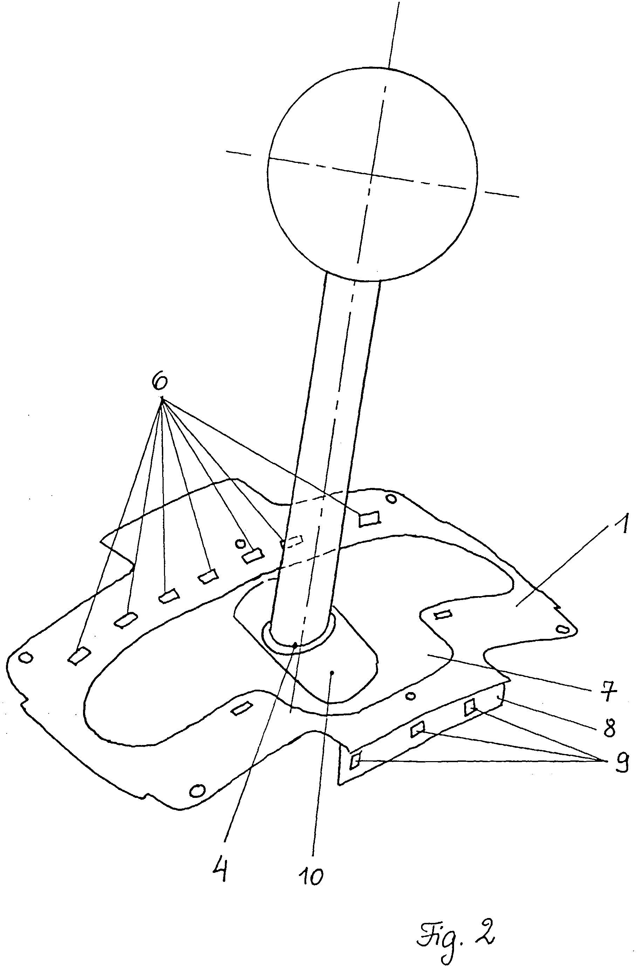

**Figur 1** zeigt eine bestückte gekrümmte Leiterplatte 1 für eine Automatikschaltvorrichtung mit einer darunterliegenden Rolloabdeckung 2. Ein Schalthebel durchgreift die gekrümmte Leiterplatte 1 durch eine Aussparung 3 und gleichzeitig die Rolloabdeckung 2 in einem Durchgriff 4. In die Rolloabdeckung 2 ist als Aktivierungselement ein Magnet 5 integriert, wie aus **Figur 1a** ersichtlich.
Beim Verschwenken des Schalthebels in der Automatikschaltgasse wird der Schalthebel in der Aussparung 3 der gekrümmten Leiterplatte 1 geführt und nimmt dabei die Rolloabdeckung 2 mit, da er diese im Durchgriff 4 durchgreift. Der Magnet 5 wird unter den Sensoren 6 entlanggeführt. Der Magnet 5 dient als Aktivierungselement für die auf der gekrümmten Leiterplatte 1 installierten Sensoren 6.
Je nachdem, welche Schaltstellung der Schalthebel einnimmt, werden durch den Magneten 5 verschiedene der Sensoren 6 angesprochen. Die erzeugten Signale werden in einem auf der gekrümmten Leiterplatte 1 installierten Prozessor verarbeitet und als entsprechende elektrische Signale an das Schaltgetriebe und die Schaltstellungsanzeige weitergegeben.

Erfindungsgemäß wird auf die Leiterplatte 1 in ebenem Zustand mittels eines Siebdruckers und einer Schablone Lotpaste aufgebracht. Im nächsten Arbeitsschritt wird die Leiterplatte 1 in einen Bestückungsautomaten gegeben, der die elektronischen oberflächenmontierbaren SMD-Bauelemente nach einem vorgegebenen Programm genau auf die vorgesehenen Plätze setzt. Die SMD-Bauelemente schwimmen quasi auf dem Lot, da sie durch die Adhäsionskräfte der Lotpaste auf dem Lot festgehalten werden.

Im nächsten Arbeitsschritt wird die bestückte Leiterplatte 1 in einen als Aufnahme dienenden Rahmen gespannt, der ihr eine vorbestimmte Krümmung gibt. Die Leiterplatte wird mit dem Rahmen in eine Lötanlage eingeführt. Die Schmelztemperatur beträgt hier zirka 210-215°C, damit das Lot schmilzt, die SMD-Bauelemente, die ihrerseits zwar bis zirka 280°C belastbar sind, dabei aber nicht beschädigt werden und auf dem Lot nicht wegschwimmen.

Das glasfaserdurchsetzte Epoxidharz der Leiterplatte erwärmt sich während des Lötvorganges und erweicht, es geht in einen plastischen Zustand über.

In der Abkühlphase erstarrt das glasfaserdurchsetzte Epoxidharz der Leiterplatte 1 in der durch den Rahmen vorbestimmten Krümmung.
Die aus dem Rahmen herausgenommene Leiterplatte 1 verbleibt in dem gekrümmten Zustand, da das Epoxidharz die eingebundenen Glasfasern beim Erstarren der Leiterplatte 1 in gekrümmtem Zustand hält.

Dem vorgenannten Arbeitsverfahren können gleichzeitig mehrere Leiterplatten nebeneinander unterzogen werden, je nachdem, wie groß die zur Verfügung stehende Anlage ist.

Erfindungsgemäß wird für die Schaltvorrichtung **eine** durchkontaktierte bestückte gekrümmte Leiterplatte verwendet, denkbar sind aber in anderen Anwendungsbereichen auch Konfigurationen, die mehrere gekrümmte Leiterplatten nebeneinander und/oder übereinander aufweisen.

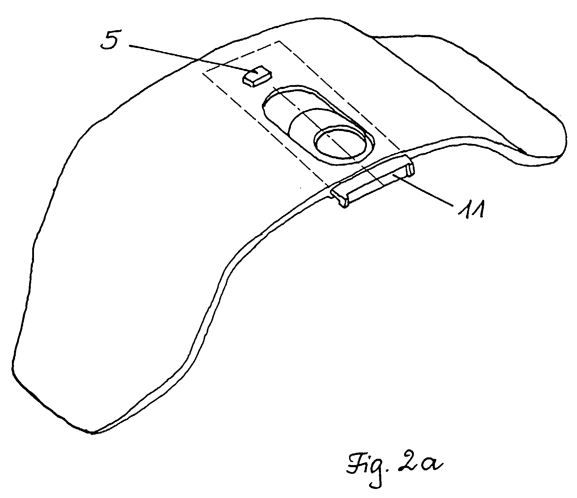

Eine in **Figur 2** gezeigte gekrümmte Leiterplatte 1 wird nach dem gleichen oben schon beschriebenen Verfahren hergestellt.

Die in **Figur 2** gezeigte gekrümmte Leiterplatte 1 ist für eine Automatikschaltvorrichtung mit Tipgasse vorgesehen und weist eine Aussparung 7 auf, in die der Schalthebel während der Tipbewegung (quer zur Fahrtrichtung) verschwenkt wird und in der die Tipbewegung (längs zur Fahrtrichtung) ausgeführt wird.

Diese gekrümmte Leiterplatte 1 ist mit einer bestückten ebenen Erganzungsleiterplatte 8 versehen, die erfindungsgemäß in einem weiteren Arbeitsschritt an die schon gekrümmte Leiterplatte 1 angelötet wird. Die Ergänzungsleiterplatte 8 ist mit Sensoren 9 bestückt. Ein Lamellenbereich 10 der Rolloabdeckung 2 mit einem Durchgriff 4 für den Schalthebel, weist neben dem als Aktivierungselement an der Rolloabdeckung 2 installierten Magneten 5 ein weiteres Aktivierungselement, vorwiegend einen Magneten 11 auf, der so am Lamellenbereich 10 angebracht ist, daß er beim Bewegen des Schalthebels in der Tipgasse (längs zur Fahrtrichtung) an den Sensoren 9 entlanggeführt wird und in diesen ein entsprechendes Signal hervorruft, welches weiterverarbeitet und als elektrisches Signal sowohl an die Getriebesteuerung als auch an die Schaltstellungsanzeige weitergeleitet wird.

Wenn der Schalthebel aus der Tipgasse wieder in die Automatikgasse verschwenkt wird (quer zur Fahrtrichtung), wird der Magnet 11, der an dem Lamellenbereich 10 angebracht ist, aus dem Erfassungsbereich der Sensoren 9 herausgeführt. Um die Schaltbewegungen des Fahrzeugführers (längs zur Fahrtrichtung) in der Automatikschaltgasse zu registrieren, wird wieder der Magnet 5 wirksam.

Erfindungsgemäß wurde eine Schaltvorrichtung geschaffen, die eine minimale Anzahl von Bauelementen benötigt, die eine optimale Ausleuchtung der Schaltstellungssymbole ermöglicht und die keine mit dem Schalthebel mitbewegten Kabel und Verbinder aufweist. Die Verbindung zwischen Schaltvorrichtung und übriger Elektronik des Fahrzeuges wird über einen an die gekrümmten Leiterplatte angelöteten Steckverbinder hergestellt.

Die optimale Ausleuchtung wird durch eine gekrümmte Leiterplatte erreicht, die in ebenem Zustand bestückt wird, in gekrümmtem Zustand gelötet wird und nach dem Erkalten auf Grund ihrer inneren Struktur in diesem gekrümmten Zustand verbleibt.

### Bezugszeichenliste:

- 1: Leiterplatte
- 2: Rolloabdeckung
- 3: Aussparung
- 4: Durchgriff
- 5: Magnet
- 6: Sensoren
- 7: Aussparung
- 8: Ergänzungsleiterplatte
- 9: Sensoren
- 10: Lamellenbereich
- 11: Magnet

## Patentansprüche

1. Schaltvorrichtung für ein Getriebe eines KFZ mit einer mit Sensoren, Leuchtdioden, Prozessoren und anderen elektronischen Bauelementen bestückten Leiterplatte (1), die unter einer Abdeckung der Schaltvorrichtung installiert ist,
- einem diese Abdeckung, eine Rolloabdeckung (2) und eine Aussparung der Leiterplatte durchgreifenden Schalthebel, wobei
- die Leiterplatte (1) konform zu der Krümmung der Abdeckung der Schaltvorrichtung gekrümmt und die gekrümmte Leiterplatte (1) in einem Abstand unter der Abdeckung der Schaltvorrichtung angebracht ist,
- die Rolloabdeckung (2) unterhalb der gekrümmten Leiterplatte (1) im Gehäuse der Schaltvorrichtung mit dem Schalthebel beweglich geführt ist und
- die Rolloabdeckung Aktivierungselemente (5, oder 5 und 11) aufweist, die in den der jeweiligen Schaltstellung zugeordneten Sensoren (6) Signale auslösen, die erfaßt und anschließend weiterverarbeitet werden.

2. Schaltvorrichtung nach Anspruch 1,
**dadurch gekennzeichnet, daß**
die gekrümmte Leiterplatte (1) eine Ergänzungsleiterplatte (8) aufweist.

3. Schaltvorrichtung nach Anspruch 2,
**dadurch gekennzeichnet, daß**
die Ergänzungsleiterplatte (8) mit Sensoren (9) bestückt ist, die mit einem zusätzlichen Aktivierungselement (11) an der Rolloabdeckung (2) zusammenwirken.

4. Schaltvorrichtung nach einem der vorhergehenden Ansprüche,
**dadurch gekennzeichnet, daß**
die Aktivierungselemente (5, oder 5 und 11) Magnete sind.

5. Schaltvorrichtung nach einem der vorhergehenden Ansprüche,
**dadurch gekennzeichnet, daß**
die elektronischen Bauelemente bis auf eine Temperatur von circa 280 °C belastbare SMD-Bauelemente (surface mounted devices) sind.

6. Verfahren zur Herstellung der gekrümmten Leiterplatte der Schaltvorrichtung nach einem der vorhergehenden Ansprüche,
wobei auf eine starre, mit Leiterzügen versehene, thermoplastisch verformbare, ebene Leiterplatte Lot aufgebracht wird, anschließend die Bauelemente positioniert werden, die bestückte Leiterplatte in eine gekrümmte Aufnahme eingespannt und in einem Lötofen bis auf die Löttemperatur erhitzt wird, um die Leiterplatte abschließend auf ihre Erstarrungstemperatur abzukühlen.

7. Verfahren zur Herstellung einer gekrümmten Leiterplatte nach Anspruch 6,
**dadurch gekennzeichnet, daß**
die Erhitzung der Leiterplatte (1) in dem Lötofen auf circa 210 bis 215 °C erfolgt.

## Claims

1. Gearshift apparatus for a motor vehicle transmission comprising a printed-circuit board (1) fitted with sensors, light-emitting diodes, processors and other electronic components and installed under a cover of the gearshift apparatus,
- a gearshift lever, which penetrates said cover, a roller-blind-type cover (2) and a cut-out of the printed-circuit board, wherein
- the printed-circuit board (1) is curved in accordance with the curvature of the cover of the gearshift apparatus and the curved printed-circuit board (1) is provided at a distance below the cover of the gearshift apparatus,
- the roller-blind-type cover (2) is guided movably by means of the gearshift lever below the curved printed-circuit board (1) in the housing of the gearshift apparatus and
- the roller-blind-type cover comprises activating elements (5, or 5 and 11), which in the sensors (6) associated with the respective gearshift position trigger signals, which are detected and subsequently further processed.

2. Gearshift apparatus according to claim 1,
**characterized in that**
the curved printed-circuit board (1) comprises a supplementary printed-circuit board (8).

3. Gearshift apparatus according to claim 2,
**characterized in that**
the supplementary printed-circuit board (8) is fitted with sensors (9), which cooperate with an additional activating element (11) on the roller-blind-type cover (2).

4. Gearshift apparatus according to one of the preceding claims,
**characterized in that**
the activating elements (5, or 5 and 11) are magnets.

5. Gearshift apparatus according to one of the preceding claims,
**characterized in that**
the electronic components are surface-mounted devices loadable to a temperature of around 280°C.

6. Method of manufacturing the curved printed-circuit board of the gearshift apparatus according to one of the preceding claims,
wherein solder is applied onto a rigid, thermoplastically deformable, flat printed-circuit board provided with printed conductors, then the components are positioned and the printed-circuit board with components fitted is clamped into a curved receiver and heated in a soldering furnace up to the soldering temperature before the printed-circuit board is finally cooled down to its solidification temperature.

7. Method of manufacturing a curved printed-circuit board according to claim 6,
**characterized in that**
the heating of the printed-circuit board (1) in the soldering furnace is effected up to around 210 to 215°C.

## Revendications

1. Dispositif de commande pour une boîte de vitesses d'un véhicule automobile avec une carte de circuit imprimé (1) équipée de capteurs, de diodes luminescentes, de processeurs et d'autres composants électroniques, qui est installée sous un couvercle du dispositif de commande,
- un levier de commande passant à travers ce couvercle, un couvercle roulant (2) et un évidement de la carte de circuit imprimé, dans lequel :
- la carte de circuit imprimé (1) est courbée conformément à la courbure du couvercle du dispositif de commande et la carte de circuit imprimé courbée (1) est agencée à une certaine distance au dessous du couvercle du dispositif de commande.
- le couvercle roulant (2) est guidé de manière à se déplacer au dessous de la carte de circuit imprimé courbée (1) dans le boîtier du dispositif de commande avec le levier de commande, et
- le couvercle roulant présente des éléments d'activation (5, ou 5 et 11), qui déclenchent dans les capteurs affectés à la position de commande respective (6) des signaux qui sont détectés, puis retraités.

2. Dispositif de commande selon la revendication 1, caractérisé en ce que la carte de circuit imprimé courbée (1) présente une carte de circuit imprimé de complément (8).

3. Dispositif de commande selon la revendication 2, caractérisé en ce que la carte de circuit imprimé de complément (8) est équipée de capteurs (9), qui coopèrent avec un élément d'activation supplémentaire (11) sur le couvercle roulant (2).

4. Dispositif de commande selon l'une quelconque des revendications précédentes, caractérisé en ce que les éléments d'activation (5, ou 5 et 11) sont des aimants.

5. Dispositif de commande selon l'une quelconque des revendications précédentes, caractérisé en ce que les composants électroniques sont des composants SMD (surface mounted devices) qui peuvent être soumis à une température allant jusqu'à environ 280°C.

6. Procédé de fabrication de la carte de circuit imprimé courbée du dispositif de commande selon l'une quelconque des revendications précédentes, dans lequel on applique une brasure sur une carte de circuit imprimé rigide plane, pourvue de trajets conducteurs et déformable de façon thermoplastique, on positionne ensuite les composants, on soumet à une serrage la carte de circuit imprimé équipée dans un logement courbée et on la chauffe dans un four de brasage jusqu'à la température de brasage pour refroidir ensuite la carte de circuit imprimé à sa température de solidification.

7. Procédé de fabrication d'une carte de circuit imprimé courbée selon la revendication 6, caractérisé en ce que le chauffage de la carte de circuit imprimé (1) dans le four de brasage se fait à environ 210-215°C.
